# EUROPEAN PATENT SPECIFICATION

(11) **EP 1 385 717 B1**
(45) Date of publication and mention of the grant of the patent: **08.09.2010**
(21) Application number: 02701867.0
(22) Date of filing: 06.03.2002
(51) Int. Cl.: B60P 1/64

(54) **SUPERSTRUCTURE MOUNTING MEANS**
BEFESTIGUNGSSYSTEM FÜR EINEN LKW-WECHSELAUFBAU
SYSTEME DE MONTAGE D'UNE SUPERSTRUCTURE DE CAMION

(30) Priority: 06.03.2001 SE 0100738
(43) Date of publication of application: 04.02.2004
(73) Proprietor: Laxo Mekan AB, 70221 Örebro (SE); Himberg, Tomas, 70221 Örebro (SE)
(72) Inventor: PERSSON, Claes, (SE)
(74) Representative: Janson, Ronny
(86) International application number: PCT/SE2002/000393
(87) International publication number: WO 2002/070301

(56) References cited:
- WO-A1-91/12153
- SE-C2- 504 144

## Description

The present invention generally relates to a superstructure system mounting for trucks and other vehicles, whereby is meant such a system, by means of which it is possible to quickly and simply substitute one object by another object, for instance substituting a superstructure of a truck by another superstructure, like from being a truck having a conventional wagon bridge to a truck having a turntable for a trailer, a truck having a tank or container, a truck having a concrete mixing container, a truck having a load exchange system etc. The system is useful both for contract trucks and for distribution trucks, container-handling vehicles and for assisting cars to be used at ports and air terminals etc.

Such superstructure systems involve the advantage that one and the same truck can be used for many different purposes depending on the actual need of the day, whereby only the superstructure of the truck is exchanged.

A superstructure system for trucks of the above mentioned type is known from the patent publication WO 91/12153 (= EP 0 515 479), which system comprises a pre-manufactured intermediate frame made of longitudinally and transversally extending frame bars and frame tubes, in which the longitudinal frame bars are formed with several quick lock means having guides for corresponding mounting hooks or similar mounting means of a superstructure. The quick lock means and the mounting hooks are provided at predetermined places of the intermediate frame and the superstructure, respectively. The intermediate frame is arranged for being secured to the chassis frame of the truck, and the superstructure is thereafter adapted to lockingly engage said intermediate frame. For mounting of the superstructure there are used attachment hooks or holder pins which engage grooves of the quick locks which are mounted at the intermediate frame, which grooves are open in the direction upwards. The intermediate frame is arranged for being secured to the chassis frame of the truck by locking means which are welded or bolt connected to the chassis frame, and the superstructure is adapted to lockingly engage the quick locks, which are welded or bolt connected to the intermediate frame, by means of said attachment hooks.

An apparatus of the above mentioned type is relatively complicated and expensive to manufacture both since the intermediate frame necessarily must be adapted both to the type of chassis frame of the truck and also to the standard of the superstructures, and since the quick lock means must be mounted at specific places adapted to the corresponding attachment hooks or the corresponding attachment means of the superstructure. The intermediate frame also must be made so stable that is does not twist or otherwise changes shape when used. Further the superstructure has to be mounted to the truck chassis using hydraulic or pneumatic cylinder-piston units mounted in the transversal direction in the intermediate frame. Said cylinder-piston units require a solid intermediate frame and have to be connected to a hydraulic or pneumatic power system and therefore make the mounting means still more expensive.

The basis of the invention therefore has been to solve the problem of providing a mounting system for quickly and simply mounting an object to a base, for instance useful as in a mounting system for a superstructure for trucks, in which the several quick lock means for the superstructure are attached separately of each other indirectly onto the chassis frame, in that several of the quick lock means are arranged parallelly to each other on a support beam which, in turn, is screwed or bolted directly onto the base, like the chassis frame. The said quick lock means and the used support beam can be manufactured simply and economically and can be kept in stock for use in many different types of trucks. There is a great simplification in that there is no longer necessary to use a separate, stable intermediate frame, since the quick lock means are constantly attached indirectly over support beams, to the chassis frame, using the specific mounting means according to the invention.

In the case that the receiving quick lock means are mounted on a longitudinal beam using the specific mounting means of the invention it is only necessary to adapt the mutual distances between the locking means and the transversal distances between the rows of quick locks, whereby said beam or beams are connected to the base, like the truck chassis using a simple console for screw connecting the beam directly onto the chassis frame.

The locking hooks, by means of which the superstructure is secured in the receiving locking means on the chassis frame, preferably are arranged to operate from the interior side of the chassis frame, more preferably by mechanical means, for instance using screw lock pins. Such screw lock pins preferably are formed with a progressively curved tip at the locking pin part thereof. This presents the advantage that the locking pin, during the initial tightening thereof gets a relatively great vertical movement (downwards pulling movement) using a relatively light tightening force, whereas the final tightening of the locking pin provides a strong tightening force, in spite there is no need for a specially strong tightening force by the operator, and which final tightening provides a relatively little downwards pulling force by the operator, still giving a strong tightening force.

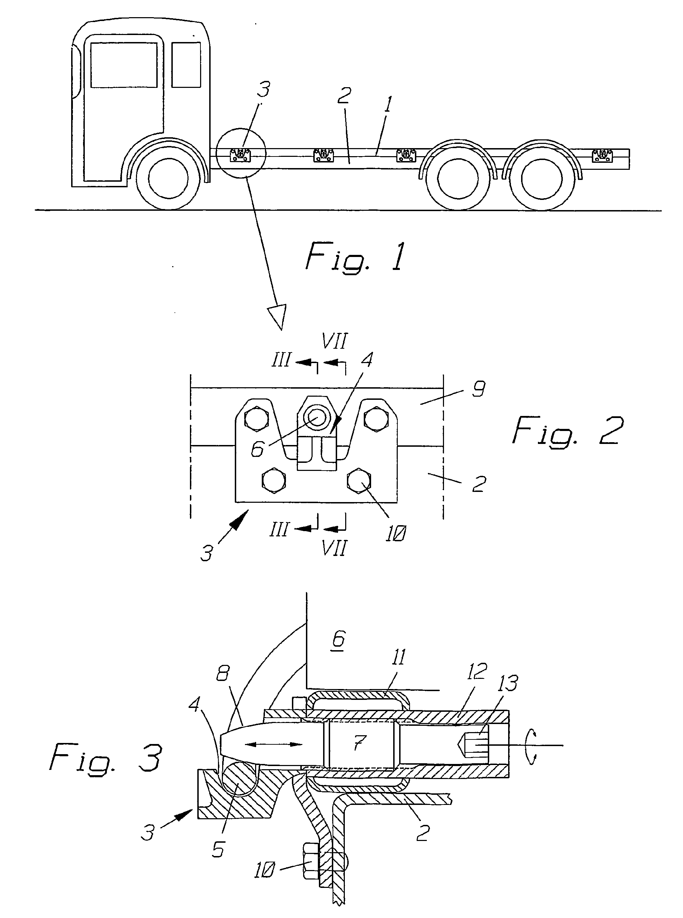

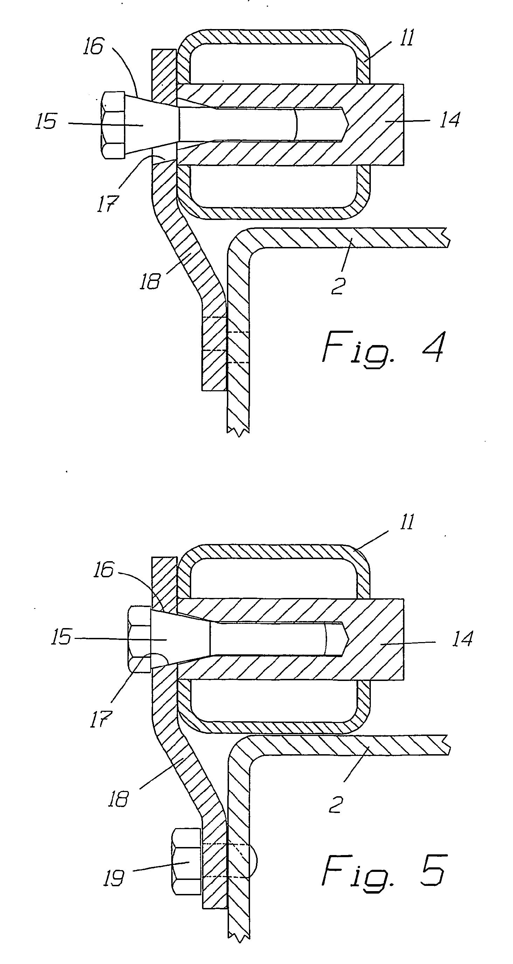

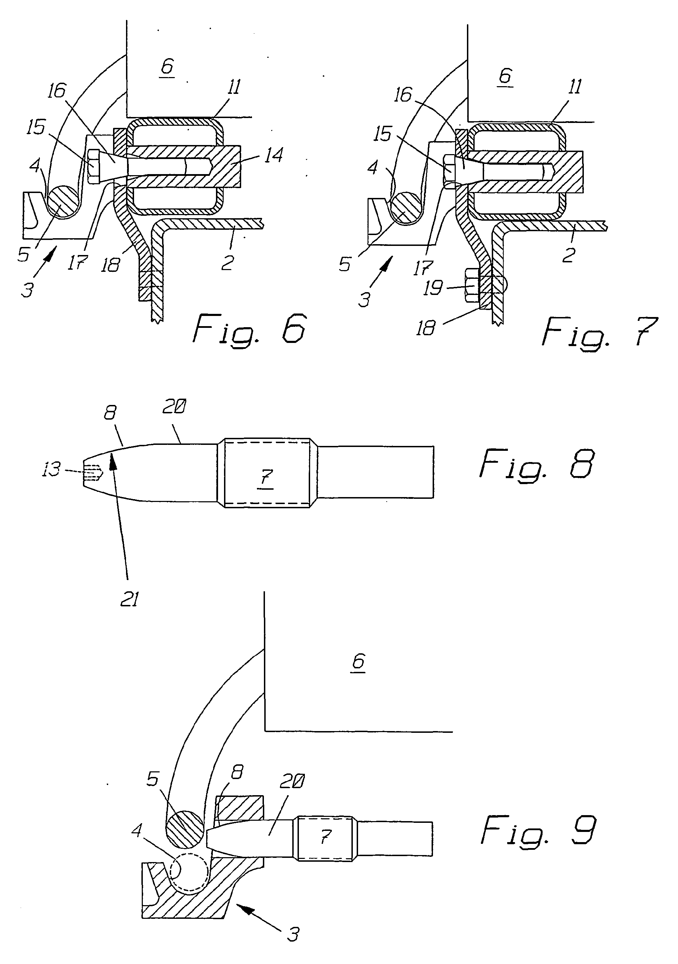

Now the invention is to be described more in detail with reference to the accompanying drawings. Figure 1 shows a side view of a truck which is formed with several quick lock means for a superstructure. Figure 2 is an enlarged side view of the encircled part of figure 1 showing a combined mounting bracket and and superstructure mounting means. Figure 3 is a cross section view showing the principle of mounting the locking means and securing a superstructure in said quick lock means. Figure 4 is a cross section view showing a system having a mounting means according to the invention for connecting the quick lock means to the truck chassis, seen in non-tightened position, and figure 5 shows the same system in fully tightened position. Figures 6 and 7 correspondingly shows the system for lockingly engage the superstructure to the vehicle chassis, in figure 6 in non-tightened position and in figure 7 in fully tightened position. Figure 8 is a side view of a locking pin according to invention, and figure 9 is an explanatory view of the function of the locking pin according to the invention.

A conventional the truck shown in figure 1 is formed with a wagon bridge 1 on top of a chassis frame 2 having a mounting beam connected thereto, which mounting beam at the outer side thereof is formed with several quick lock means 3 having V-shaped locking grooves 4 adapted to receive connection hooks 5 (see figure 3) of the superstructure 6 and to secure said superstructure 6 in relation to the chassis frame 2 using transversally extending locking pins 7 having a progressively curved cone point part 8.

The quick lock means 3 can be secured directly onto the chassis frame 2 or they may, according to a preferred embodiment of the invention, which is shown in figure 2, be attached to a for instance L-shaped mounting bar, or a mounting beam 9, which, in turn, is bolt connected or rivet connected 10 to the chassis frame 2 using the mounting means of the invention.

According to the embodiment of the invention, which is shown in figures 3-7 the quick lock means is mounted on a longitudinally extending beam or tube 11, for instance having a square cross section shape, and which is, in turn, adapted to be clamp connected to the chassis frame 2 as will be explained in the following.

As shown in the embodiment according to figure 2 the quick lock means 3 are secured, separately or in common to an L-bar 9 or a square tube or beam 11 which can be rivet connected or bolt connected 10 to the exterior side of the chassis frame 2. In the L-bar 9 or the square tube or beam 11, and extending through same, an internally threaded sleeve 12 is connected, for instance welded thereto, which sleeve 12 carries the locking pin 7 with the progressively curved pin point 8. The locking pin 7 is directed transversally out from the chassis frame 2 and is provided in such position that it can secure and press down a connection hook 5 of the superstructure into the v-groove 4 of the quick lock means 3, as illustrated in figures 3 and 9. The locking pin 7 is threaded at the exterior side thereof for co-operation with inner threads of the sleeve 12. At the inner end (figure 3) or outer end (figure 8) of the locking pin 7 there is an inner hexagon bore 13 for connection of a key (not shown) used for clamp connecting or releasing, respectively, the connection hook 5 of the superstructure. The bar 9 or the square tube or beam 11 with the quick lock means 3, the sleeve 12 and the locking pin 7 are mounted at a suitable height over the chassis frame 2, or if convenient in direct contact with the upper surface thereof.

As most clearly shown in figure 3 and 6-7 the quick lock means 3 is/are connected to a longitudinally extending beam 11 at each side of the truck, for instance a hollow beam 11 having a square cross section shape, and which at predetermined places is formed with a nut sleeve 14 extending through said beam 11, and with which a locking screw 15 is co-operating. According to the invention the locking screw 15, which is formed with a conical bevel portion 16 adjacent the screw head, extends through a conical bore 17 of a mounting bar 18 which is arranged for being mounted at the side of the chassis frame 2 by means of a bolt 19, as shown in figures 5 and 7. The mounting bar 18 is bolt connected 19 in such position that the hollow, square beam 11, by the action of the conical outer bevel portion 16 of the locking screw 15 by contact with the conical bore 17 is pressed into butt contact with the upper surface of the chassis frame 2.

As shown in figure 3 each quick lock means 3 is, with the internally threaded sleeve 12 and the locking pin 7 thereof, mounted so as to extend transversally of the square beam 11. When connecting the mounting bar 18 to the truck chassis 2 by means of the bolts 19, and when pulling of the conical locking screw 15 the beam 11 is pulled, by a wedge action, into butt contact with the upper surface of the chassis frame 2, and the quick lock means 3 are, with the V-grooves 4 thereof secured in a suitable position for receiving and locking the hooks 5 of a superstructure, thereby safely mounting of the superstructure on the truck.

According to a further specific feature of the invention the cone point part 8 of the locking pin 7 is formed progressively curved.

For making it possible to constantly and solidly press down the connection hook 5 of the superstructure in the direction towards the bottom of the V-groove 4 of the quick lock 3 without using a very strong force it is no longer necessary that the cone point part 8 has a relatively narrow cone angle, as previously used to be necessary. This used to have as an effect that the cone point part had to be made relatively long and had to be displaced a rather long distance from open position in the V-groove 4 to a fully locking position for the connection hook 5 of the superstructure. In conventional mounting bolts having a straight cone point it may happen, even if the bolt is strongly tightened, that the cone pin becomes untightened (released) depending on shocks and vibrations when the truck is moved on an uneven road.

As shown in figures 3, 8 and 9 the cone point 8 therefore is formed progessively cured, whereby it can be tightened using a relatively moderate initial axial movement and so that it is self-locking in its fully tightened position engaging the connection hook 5 of the superstructure 6. To this end the cone point part 8 is formed with a cone angle which is progressively decreased from outer end towards the cone base 20 (see figure 8). The radius of curvature 21 can be varied as desired, but in the illustrated case, which is well suited for mounting of superstructures of a truck the radius of curvature is 67 mm for a locking pin 7 having a diameter of about 23 mm, that is a radius of curvature which is about three times the diameter of the locking pin 7.

Thus, the quick lock means 3 are constantly mounted against the chassis frame 2 of the truck. First the mounting bars 18 are connected to the truck chassis 2 by means of bolts 19, thereafter the conical bolt 15-16 is pulled so as to slide along the conical bore 17 of the mounting bar so as to butt pressing the bem 11 against the upper surface of the truck chassis 2. Then a superstructure 6 can be quickly and simply mounted on the truck in that said superstructure 6 is put down on the chassis frame 2 with the connection hooks 5 thereof placed in the V-grooves 4 of the quick lock means, whereupon the locking pins 6 are tightened using an ordinary hexagon key, from inside the chassis frame 2 (figure 3) or from outside the chassis frame 2 (figure 8). A superstructure 6 can be exchanged or substituted by another superstructure 6 like quickly and simply by releasing of the locking pins 7, removing of the first superstructure 6 and putting down and locking a new superstructure on the chassis frame 2 of the truck.

### REFERENCE NUMERALS

- 1: wagon bridge
- 2: chassis frame
- 3: quick lock means
- 4: V-groove
- 5: connection hook
- 6: superstructure
- 7: locking pin
- 8: progressive cone point (of 6)
- 9: L-bar
- 10: rivet, bolt
- 11: square beam, tube
- 12: sleeve
- 13: hexagon bore
- 14: nut sleeve
- 15: locking screw
- 16: bevel portion
- 17: conical bore
- 18: mounting bar
- 19: bolt
- 20: cone base
- 21: radius of curvature

## Claims

1. A superstructure mounting system for trucks and other vehicles, the mounting system comprising an object (9, 11) comprising quick lock means (3) on which object (9,11) a superstructure is mountable, the system further comprising mounting means (14-19) for quickly and conveniently mounting the object (9, 11) comprising quick lock means (3) to a base (2), like a vehicle chassis frame, by means of which it is possible to quickly and simply substitute one superstructure (6) of the vehicle by another superstructure, **characterized in that** the mounting means (14-19) comprise a mounting bar (18) and connection means (14-17, 19) for vertically downwards clamp connecting the object (9,11) to the upper surface of the base (2), where said object (9, 11) is formed with a nut sleeve (14) and is securable to the base (2) by means of the mounting bar (18) which is fixable to the base (2), by that the mounting bar (18) is formed with a conical bore (17) engaging a conical bewel portion (16) of a locking screw (15) co-operating with the internally threaded nut sleeve (14) extending through said object (9, 11), whereby said object (9, 11) is pressed by wedge action (16, 17) into butt contact with the upper side of the base (2) when the locking screw (15) is pulled.

2. A superstructure mounting system according to claim 1, **characterized in that** said object (11) to be pressed into butt contact with the base (2) is a hollow beam (11) in which said internally threaded nut sleeve (14) is mounted for co-operation with the locking screw (15).

3. A superstructure mounting system according to claim 2, **characterized in that** said nut sleeve (14) is fixedly mounted in said hollow beam (11).

4. A superstructure mounting system according to claim 2 or 3, **characterized in that** the hollow beam (11) has a square cross section.

5. A superstructure mounting system according to any of the preceding claims, **characterized in that** the quick lock means (3) have upwards open, V-shaped grooves (4) in which connection hooks (5), for instance belonging to a superstructure (6) of a truck are adapted to be locked.

6. A superstructure mounting system according to claim 5, **characterized in that** the quick lock means (3) comprises locking pins (7) adapted to mechanically engage connection hooks (5) of said superstructure (6) **in that** said locking pins (7) are arranged to be moved transversally outwards from the base, like the vehicle chassis (2).

7. A superstructure mounting system according to claim 6, **characterized in that** said locking pins (7) are formed with threads engaging inner threads of a mounting sleeve (12) which is connected to the object (9, 11).

8. A superstructure mounting system according to one of claims 6 or 7, **characterized in that** the quick lock means (3) is formed with an internally threaded sleeve (12) which is fixedly connected to a hollow square beam (11) and extends inwards towards the centre of a chassis frame (2), in which sleeve the externally threaded locking pin (7) is displaceable for providing a locking/unlocking of the corresponding connection hook (5) of the superstructure in the V-shaped groove (4) of the quick lock means (3).

9. A superstructure mounting system according to any of claims 6-8, **characterized in that** the quick lock means (3) with the locking pins (7) are attached to a bar (9) or a hollow beam (11) over a mounting bar (18) which is connected directly to the base, like the chassis frame (2) by a bolt joint or rivet joint (10).

10. A superstructure mounting system according to any of claims 6-9, **characterized in that** the points (8) of the locking pins (7) are formed with progressively outwards increased contact angle against the connection hook (5) of the superstructure.

11. A superstructure mounting system according to claim 10, **characterized in that** the progressive cone point (8) of the locking pin has a radius of curvature which is about three time greater than the diameter of the locking pin (7).

## Patentansprüche

1. Überbau-Montagesystem für Lastwagen und andere Fahrzeuge, wobei das Montagesystem ein Objekt (9, 11) mit einer Schnellverriegelungseinrichtung (3) umfasst, an welchem Objekt (9, 11) ein Überbau montierbar ist, wobei das System ferner Montageeinrichtungen (14-19) zum schnellen und bequemen Montieren des Objekts (9, 11) mit der Schnellverriegelungseinrichtung (3) an einer Basis (2) wie einem Fahrzeugfahrgestellrahmen umfasst, mittels derer es möglich ist, einen Überbau (6) des Fahrzeugs gegen einen anderen Überbau schnell und einfach auszutauschen, **dadurch gekenntzeichnet, dass** die Montageeinrichtungen (14-19) eine Montagestange (18) und Verbindungseinnchtungen (14-17, 19) zur Klemmverbindung des Objekts (9, 11) vertikal nach unten mit der oberen Oberfläche der Basis (2) umfassen, wobei das Objekt (9, 11) kit einer Hülsenmutter (14) ausgebildet ist und an der Basis (2) mittels der Montagestange (18) befestigt werden kann, die an der Basis (2) befestigt werden kann, indem die Montagestange (18) mit einer konischen Bohrung (17) ausgebildet ist, die mit einem konischen Absohragungsteil (16) einer Verriegelungsschraube (15) in Eingriff kommt, die mit der mit Innengewinde versehenen Hülsenmutter (14) zusammenwirkt, die sich durch das Objekt (9, 11) erstreckt, wodurch das Objekt (9, 11) durch eine Keilwirkung (16,17) mit der Oberseite der Basis (2) in Stoßkontakt gedrückt wird, wenn die Verriegelungsschraube (15) festgezogen wird.

2. Überbau-Montagesystem nach Anspruch 1, **dadurch gekennzeichnet, dass** das mit der Basis (2) in Stoßkontakt zu drückende Objekt (11) ein Hohlprofil (11) ist, in dem die mit Innengewinde versehene Hülsenmutter (14) zum Zusammenwirken mit der Vernegetungsschraube (15) montiert ist,

3. Überbau-Montagesystem nach Anspruch 2, **dadurch gekennzeichnet, dass** die Hülsenmutter (14) fest in dem Hohlprofil (11) montiert ist.

4. Überbau-Montagesystem nach Anspruch 2 oder 3, **dadurch gekennzeichnet, dass** das Hohlprofil (11) einen quadratischen Querschnitt aufweist.

5. Überbau-Montagesystem nach einem der vorangehenden Ansprüche, **dadurch gekennzeichnet, dass** die Schnellverriegelungseinrichtung (3) nach oben offene, V-förmige Nuten (4) aufweist, in denen Verbindungshaken (5), die beispielsweise zu einem Überbau (6) eines Lastwagens gehören, zur Verriegelung ausgelegt sind.

6. Überbau-Montagesystem nach Anspruch 5, **dadurch gekennzeichnet, dass** die Schuellverriegelungseinrichtung (3) Verriegelungsstifte (7) umfasst, die dazu ausgelegt sind, mit Verbindungshaken (5) des Überbaus (6) mechanisch in Eingriff zu kommen, indem die Verriegelungsstifte (7) so angeordnet sind, dass sie quer aus der Basis wie dem Fahrzeugfahrgestell (2) heraus bewegt werden.

7. Überbau-Montagesystem nach Anspruch 6, **dadurch gekennzeichnet, dass** die Verriegelungsstifte (7) mit Gewinden ausgebildet sind, die mit Innengewinden einer Montagehülse (12) in Eingriff stehen, die mit dem Objekt (9, 11) verbunden ist.

8. Überbau-Montagesystem nach einem der Ansprüche 6 oder 7, **dadurch gekennzeichnet, dass** die Schnellverriegelungseinrichtung (3) mit einer mit Innengewinde versehenen Hülse (12) ausgebildet ist, die fest mit einem quadratischen Hohlprofil (11) verbunden ist und sich in Richtung des Zentrums eines Fahrgestellrahmens (2) nach innen erstreckt, in welcher Hülse der mit Außengewinde versehene Verriegelungsstift (7) verschiebbar ist, um eine Verriegelung/Entriegelung des entsprechenden Verbindungshakens (5) des Überbaus in der V-förmigen Nut (4) der Schnellverriegelungseinrichtung (3) vorzusehen.

9. Überbau-Montagesystem nach einem der Anspruche 6-8, **dadurch gekennzeichnet, dass** die Schnellverriegelungseinrichtung (3) mit den Verriegelungsstiften (7) an einer Stange (9) oder einem Hohlprofil (11) über eine Montagestange (18) befestigt wird, die durch eine Bolzenverbindung oder Nietverbindung (10) direkt mit der Basis wie dem Fahrgestellrahmen (2) verbunden ist.

10. Überbau-Montagesystem nach einem der Ansprüche 6-9, **dadurch gekennzeichnet, dass** die Spitzen (8) der Verriegelungsstifte (7) mit einem fortschreitend nach außen vergrößerten Kontaktwinkel mit dem Verbindungshaken (5) des Überbaus ausgebildet sind.

11. Überbau-Montagesystem nach Anspruch 10, **dadurch gekennzeichnet, dass** die fortschreitende Kegelspitze (8) des Verriegelungsstifts einen Krümmungsradius aufweist, der etwa dreimal größer ist als der Durchmesser des Verriegelungsstifts (7).

## Revendications

1. Système de montage de superstructure pour camions et autres véhicules, le système de montage comprenant un objet (9, 11) comprenant des moyens de blocage rapide (3), sur lequel objet (9, 11) on peut monter une superstructure, le système comprenant en outre des moyens de montage (14 - 19) pour monter de manière rapide et appropriée l'objet (9, 11) comprenant des moyens de blocage rapide (3) sur une base (2), comme un châssis de véhicule, au moyen desquels il est possible de remplacer rapidement et simplement une superstructure (6) du véhicule par une autre superstructure, **caractérisé en ce que** les moyens de montage (14 - 19) comprennent une barre de moulage (18) et des moyens de raccordement (14 - 17, 19) pour raccorder verticalement vers le bas par serrage l'objet (9, 11) à la surface supérieure de la base (2), dans lequel ledit objet (9, 11) est formé avec un manchon d'écrou (14) et peut être fixé sur la base (2) au moyen de la barre de montage (18) qui peut être fixée sur la base (2), grâce à cela, la barre de montage (18) est formée avec un alésage conique (17) mettant en prise une partie de biseau conique (16) d'une vis de blocage (15) coopérant avec l'écrou de manchon (14) intérieurement fileté s'étendant à travers ledit objet (9, 11), moyennant quoi ledit objet (9, 11) est comprimé par l'action de cale (16, 17) en contact de butée avec le côté supérieur de la base (2) lorsque la vis de blocage (15) est tirée.

2. Système de montage de superstructure selon la revendication 1, **caractérisé en ce que** ledit objet (11) à comprimer en contact de buttée avec la base (2) est une poutre creuse (11) dans laquelle ledit manchon d'écrou (14) fileté intérieurement est monté pour coopérer avec la vis de blocage (15).

3. Système de montage de superstructure selon la revendication 2, **caractérisé en ce que** ledit manchon d'écrou (14) est monté de manière fixe dans ladite poutre creuse (11).

4. Système de montage de superstructure selon la revendication 2 ou 3, **caractérisé en ce que** la poutre creuse (11) aune section transversale carrée.

5. Système de montage de superstructure selon l'une quelconque des revendications précédentes, **caractérisé en ce que** les moyens de blocage rapide (3) ont des rainures en forme de v ouvertes vers le haut (4) dans lesquelles des crochets de raccordement (5), par exemple appartenant à une superstructure (6) d'un camion, sont adaptés pour être bloqués.

6. Système de montage de superstructure selon la revendication 5, **caractérisé en ce que** les moyens de blocage rapide (3) comprennent des broches de blocage (7) adaptées pour mettre en prise mécaniquement des crochets de raccordement (5) de ladite superstructure (6) **en ce que** lesdites broches de blocage (7) sont agencées pour être déplacées transversalement vers l'extérieur à partir de la base, comme le châssis de véhicule (2).

7. Système de montage de superstructure selon la revendication 6, **caractérisé en ce que** lesdites broches de blocage (7) sont formées avec des filetages mettant en prise des filetages internes d'un manchon de montage (12) qui est raccordé à l'objet (9, 11).

8. Système de montage de superstructure selon l'une quelconque des revendications 6 ou 7, **caractérisé en ce que** les moyens de blocage rapide (3) sont formés avec un manchon (12) intérieurement fileté, qui est raccordé de manière fixe à une poutre carrée creuse (11) et s'étendent vers l'intérieur vers le centre d'un châssis (2), dans lequel manchon, la broche de blocage (7) extérieurement filetée est déplaçable pour fournir un blocage/déblocage du crochet de raccordement (5) correspondant de la superstructure dans la rainure en forme de V (4) des moyens de blocage rapide (3).

9. Système de montage de superstructure selon l'une quelconque des revendications 6 à 8, **caractérisé en ce que** les moyens de blocage rapide (3) avec les broches de blocage (7) sont fixés à une barre (9) ou une poutre creuse (11) sur une barre de montage (18) qui est raccordée directement à la base, comme le châssis (2) avec un assemblage par boulon ou un assemblage par rivet (10).

10. Système de montage de superstructure selon l'une quelconque des revendications 6 à 9, **caractérisé en ce que** les pointes (8) des broches de blocage (7) sont formées avec un angle de contact progressivement croissant vers l'extérieur contre le crochet de raccordement (5) de la superstructure.

11. Système de montage de superstructure, selon la revendication 10, **caractérisé en ce que** la pointe de cône progressive (8) de la broche de blocage a un rayon de courbure qui est environ trois fois supérieur au diamètre de la broche de blocage (7).
